Europäisches Patentamt

European Patent Office

Office européen des brevets

(19)

(11) Veröffentlichungsnummer: **0 245 673**

**A2**

(12) **EUROPÄISCHE PATENTANMELDUNG**

(21) Anmeldenummer: **87105799.8**

(22) Anmeldetag: **18.04.87**

(51) Int. Cl.4: **G01N 9/26**

(30) Priorität: **15.05.86 DE 3616385**

(43) Veröffentlichungstag der Anmeldung:
**19.11.87 Patentblatt 87/47**

(84) Benannte Vertragsstaaten:
**AT BE CH DE ES FR GB GR IT LI NL SE**

(71) Anmelder: **Walter Schroer Mess- und Regeltechnik**
**Bergische Landstrasse 240**
**D-4000 Düsseldorf 12(DE)**

(72) Erfinder: **Krüger, Klaus**
**Göllstrasse 14**
**A-5020 Salzburg(AT)**

(74) Vertreter: **Patentanwaltsbüro Cohausz & Florack**
**Postfach 14 01 47**
**D-4000 Düsseldorf 1(DE)**

(54) Verfahren und Vorrichtung zum Messen der Dichte einer Flüssigkeit.

(57) Die Erfindung betrifft ein Verfahren und eine Vorrichtung zum Messen der Dichte einer Flüssigkeit mit einem Meßfühler, der innerhalb der Flüssigkeit angeordnet ist und die Frequenz eines Oszillators bestimmt. Der Flüssigkeitsdruck der zu bestimmenden Flüssigkeit (4) und einer Referenzflüssigkeit (5) werden gemessen und die Differenz der Drücke verändert die Zugspannung eines mechanisch - schwingfähigen Elementes (13), dessen Frequenz als Maß für die Dichte der zu bestimmenden Flüssigkeit verwendet wird.

Fig. 1

EP 0 245 673 A2

## Verfahren und Vorrichtung zum Messen der Dichte einer Flüssigkeit

Die Erfindung betrifft ein Verfahren und eine Vorrichtung zum Messen der Dichte einer Flüssigkeit mit einem Meßfühler, der innerhalb der Flüssigkeit angeordnet ist und die Frequenz eines Oszillators bestimmt.

Es ist bekannt, den hydrostatischen Druck einer Flüssigkeit auf eine Membran einwirken zu lassen, die durch eine Feder in der dem Flüssigkeitsdruck entgegengesetzten Richtung belastet ist, um den Flüssigkeitsdruck aufzuheben. Diese Membran wird aufgrund unterschiedlicher Flüssigkeitsdichte einem unterschiedlich hohen hydrostatischen Flüssigkeitsdruck ausgesetzt, so daß die Bewegungen der Membran ein Maß für die Flüssigkeitsdichte sind. Diese bekannte Meßvorrichtung muß erhebliche Federkräfte kompensieren und ist hierdurch ungenau. Auch verändert sich das Meßergebnis aufgrund von Temperaturänderungen, so daß auch hierdurch eine hohe Meßgenauigkeit nicht erreichbar ist.

Aufgabe der Erfindung ist, es ein Verfahren und eine Vorrichtung zum Messen der Dichte einer Flüssigkeit so zu verbessern, daß geringste Dichteunterschiede exakt meßbar sind und die Meßergebnisse durch äußere Einflüsse insbesondere durch Temperaturänderungen nicht verändert werden.

Diese Aufgabe wird erfindungsgemäß dadurch gelöst, daß der Flüssigkeitsdruck der zu bestimmenden Flüssigkeit und einer Referenzflüssigkeit gemessen werden, und die Differenz der Drücke die Zugspannung eines mechanisch - schwingfähigen Elementes verändert, dessen Frequenz als Maß für die Dichte der zu bestimmenden Flüssigkeit verwendet wird.

Hierdurch wird eine hydrostatische Waage geschaffen, bei der die zu messende Flüssigkeit stets mit einer Referenzflüssigkeit verglichen wird und wobei mechanische Mittel gegen den Druck der zu messenden Flüssigkeit nicht erforderlich sind. Es wird damit eine hohe Meßgenauigkeit unabhängig von äußeren Einflüssen insbesondere von Prozeßdruckschwankungen und Temperaturänderungen erzielt. Die Messung kann direkt im Hauptstrom vorgenommen werden, so daß die Meßvorrichtung stets vom Hauptstrom umflossen ist und damit auch während der Reinigung einer Anlage mitgereinigt wird.

Besonders vorteilhaft ist es, daß durch dieses Verfahren und durch diese Vorrichtung nicht nur die Dichte meßbar ist, sondern auch alle physikalischen Größen durch die Dichtemessung erfaßt werden können, die sich von der Dichte ableiten lassen, wie z. B. den Säuregehalt, die Stammwürze, den Zuckergehalt, den Fettgehalt oder den Gehalt an Kohlensäure einer Flüssigkeit.

Besonders vorteilhaft ist es, wenn der Druck der zu bestimmenden Flüssigkeit an einer Seite einer Membran oder des Balges und die Referenzflüssigkeit an der anderen Seite einer Membran oder des Balges anliegt, und daß an der Membran oder dem Balg das schwingfähige Element direkt oder durch Übertragungsteile befestigt wird. Dies führt zu einer besonders einfachen und unanfälligen Konstruktion. Hierbei kann der Druck der beiden Flüssigkeiten an einer Seite der Membran oder des Balges durch eine Übertragungsflüssigkeit anliegen, die an einer Seite einer zweiten Membran oder eines zweiten Balges anliegt, an deren zweiten Seite die zu bestimmende Flüssigkeit oder die Referenzflüssigkeit anliegt.

In einer Alternative wird vorgeschlagen, daß der Druck der zu bestimmenden Flüssigkeit an einer Seite einer ersten Membran oder eines Balges und die Referenzflüssigkeit an der entgegengesetzten Seite einer zweiten Membran oder eines zweiten Balges anliegt, und daß zwischen den Membranen oder den Bälgen das schwingfähige Element gespannt ist. Eine solche Konstruktion läßt auf die Meßvorrichtung einwirkende Temperaturunterschiede und damit Materialdehnungen nicht als verfälschende Werte in die Messungen eingehen.

Eine besonders einfache Herstellung und eine leichte Zugänglichkeit des schwingfähigen Elementes für Reparaturen und für einen Austausch wird dadurch erreicht, daß das schwingfähige Element in einem mit Gas insbesondere Luft gefülltem Rohr einliegt, das an einer Seite verschlossen und an dieser Seite das schwingfähige Element mit einem Ende fest ist, und daß das schwingfähige Element mit seinem anderen Ende an der Membran oder dem Balg fest ist.

Eine Überbeanspruchung des schwingfähigen Elementes in Zugrichtung wird dadurch verhindert, wenn mindestens eine der Befestigungsstellen des schwingfähigen Elements von einer Überlastsicherung gebildet wird.

Besonders vorteilhaft ist es, wenn die Membran, an der die zu bestimmende Flüssigkeit anliegt, parallel zur Strömungsrichtung der zu bestimmenden Flüssigkeit ist. Hierdurch wird vermieden, daß sich durch die zu messende Flüssigkeit an der Membran, an der diese Flüssigkeit anliegt, ein Staudruck bildet, der das Meßergebnis verfälscht.

Damit die Referenzflüssigkeit stets dieselbe Temperatur wie die zu messende Flüssigkeit hat, wird vorgeschlagen, daß die Referenzflüssigkeit in einem insbesonderen senkrechten Rohr ist, das innerhalb der zu bestimmenden Flüssigkeit liegt. Hierbei kann auch das mit Referenzflüssigkeit gefüllte senkrechte Rohr mit dem Inneren eines der Referenzflüssigkeit gefüllten Balges verbunden sein, der innerhalb der zu bestimmden Flüssigkeit liegt. Hierdurch wird sichergestellt, daß die Referenzflüssigkeit sich nicht mit der zu messenden Flüssigkeit mischen kann und dennoch stets der Temperatur der zu messenden Flüssigkeit ausgesetzt ist.

Ein genaues und einfaches Erfassen der Druckänderungen wird dadurch erreicht, daß das schwingfähige Element stromdurchflossen und Bestandteil eines Schwingkreises ist. Hierbei kann das schwingfähige Element ein Magnetfeld durchqueren und aufgrund der Schwankungen des durch ihn fließenden Stroms schwingen. Vorzugsweise wird hierzu auch vorgeschlagen, das das Magnetfeld durch seitlich des Elementes angeordnete Elektromagnete, insbesondere Permanentmagnete, erzeugt wird.

Besonders vorteilhaft ist es, wenn das schwingfähige Element ein langgestrecktes Teil geringer Biegefestigkeit aus stromleitendem Material, insbesondere eine Saite, ein Draht, ein Rohr, eine Folie oder ein federendes Element ist. Hierbei kann das schwingfähige Element elektrisch mit einem Meßinstrumen verbunden sein, das den zweiten Bestandteil des Schwingkreises bildet und die jeweilige Frequenz und damit die Flüssigkeitsdichte anzeigt.

Eine einfache sehr genau messende Vorrichtung wird dann erreicht, wenn das schwingfähige Element zwischen zwei Membranen eingespannt ist, die jeweils die beiden Flüssigkeiten voneinander trennen.

Eine besonders einfach außen anzubringende und leicht zu wartende als auch zu reparierende Konstruktion wird dadurch geschaffen, daß die zu bestimmende Flüssigkeit durch ein Rohr, Gehäuse oder einen Behälter geführt ist, dessen Wandung mindestens eine Öffnung aufweist in der eine Membran oder ein Balg befestigt oder angeschlossen ist. Hierbei ist von Vorteil, wenn in der Wandung zwei Öffnungen sind, wobei an der ersten Öffnung eine erste Membran befestigt ist, an deren Vorderseite die zu bestimmende Flüssigkeit anliegt und an deren Rückseite die Referenzflüssigkeit anliegt, und daß an der zweiten Öffnung eine zweite Membran befestigt ist, an deren Vorderseite die zu bestimmende Flüssigkeit anliegt und deren Rückseite mit dem mechanisch schwingfähigen Element direkt oder indirekt verbunden ist, das ferner von der Referenzflüssigkeit beeinflußt ist. Auch ist von Vorteil, wenn auf den Wandungsöffnungen außen Gehäuse befestigt sind, die durch einen Deckel, insbesondere eine Spannmutter, verschlossen sind, der eine die Membran(en) tragende Einrichtung gegen den Öffnungsrand drückt.

Ferner wird vorzugsweise vorgeschlagen, daß das Innere der die Membran(en) tragenden Einrichtungen über eine Leitung verbunden sind, die außerhalb des Rohres, Gehäuses oder des Behälters verläuft.

Es zeigen:

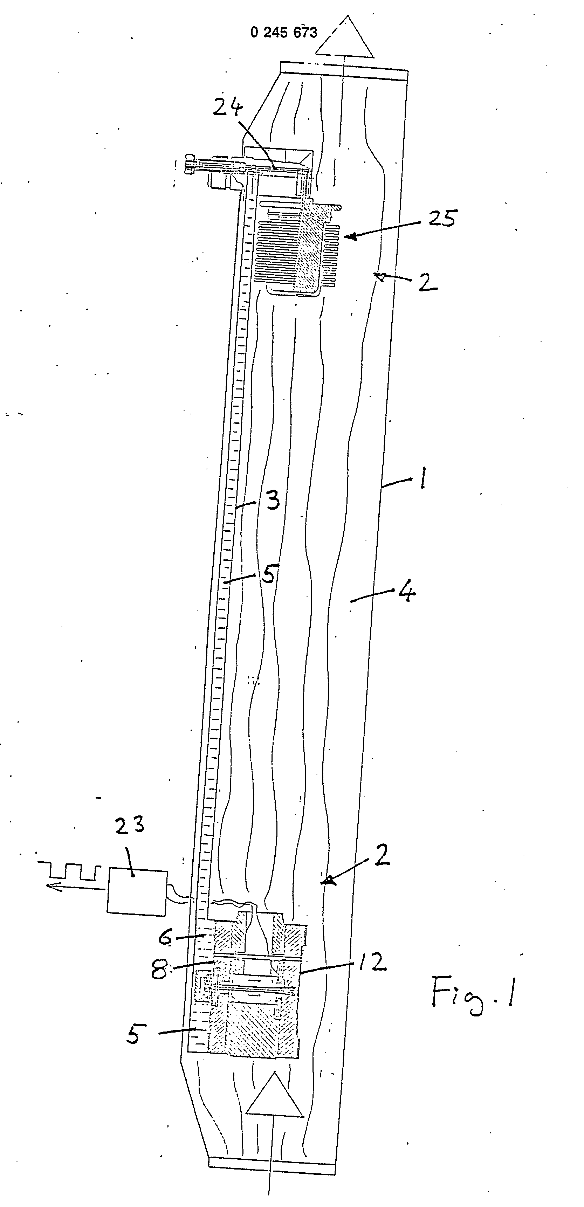

Fig. 1 einen senkrechten Schnitt durch die Vorrichtung,

Fig. 2 einen Ausschnitt aus Fig.1 im unteren Bereich und

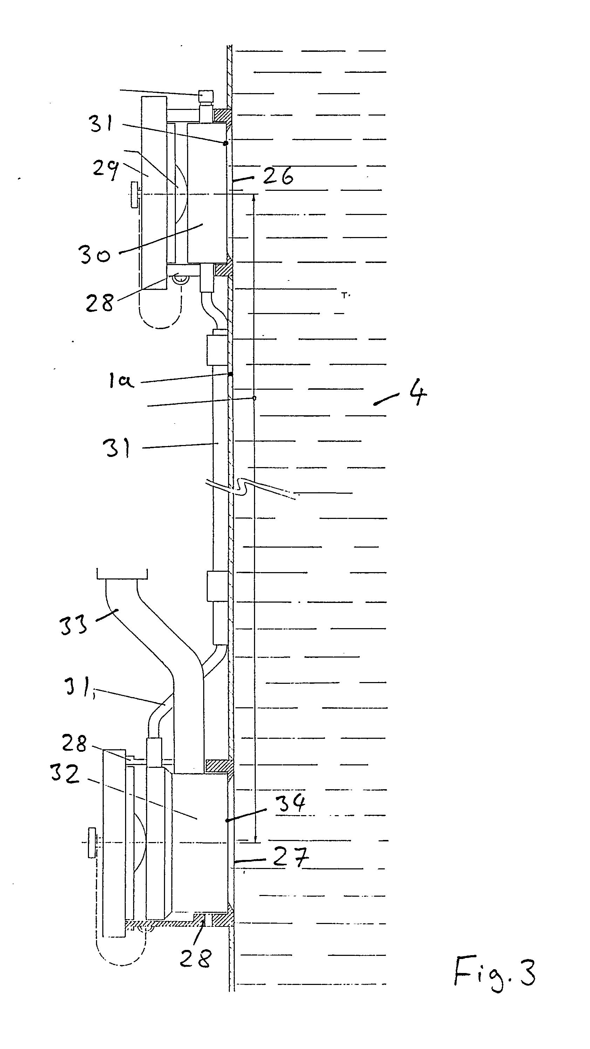

Fig. 3 einen senkrechten Schnitt durch den linken Teil einer alternativen Vorrichtung.

Ein senkrechtes rohrförmiges Gehäuse 1 ist in einer nicht dargestellten Rohrleitung zwischen gesetzt, die die zu messende Flüssigkeit enthält. Im Ausführungsbeispiel fließt diese Flüssigkeit von unten nach oben und das Gehäuse 1 weist einen größeren Querschnitt auf als die Flüssigkeitsleitung, da im Gehäuse 1 eine Meßvorrichtung 2 eingesetzt ist, die den Durchflußquerschnitt des Gehäuses 1 verringert, so daß durch den größeren Querschnitt des Gehäuses 1 dafür gesorgt ist, daß der Durchflußquerschnitt des Gehäuses nicht kleiner ist als der der Rohrleitung.

Im Gehäuse 1 ist seitlich achsparallel verlaufend ein Rohr 3 befestigt, das ringsum von er zu messenden Flüssigkeit 4 umflossen ist und dessen Durchmesser um ein Vielfaches geringer ist als der des Gehäuses 1. Im Rohr 3 befindet sich eine Referenzflüssigkeit 5, die ähnlich der zu messenden Flüssigkeit 4 ist. Ist z. B. die zu messende Flüssigkeit 4 eine Limonade, so kann die Referenzflüssigkeit von Wasser gebildet sein.

Mit dem unteren Ende mündet das Rohr 3 in einer Kammer 6, von der eine senkrechte Wand 7 in einem Ausschnitt eine senkrechte Membran 8 trägt. An der Membran liegt somit auf einer Seite die Referenzflüssigkeit 5 an. Auf der gegenüberliegenden Seite liegt an der Membran 8 eine Übertragungsflüssigkeit 9 insbesondere in Form von dünnflüssigem Öl an. Hierbei ist der rückwärtige Raum zur Membran 8 über eine Leitung 10 mit einem Raum 11 verbunden, indem sich auch die Übertragungsflüssigkeit 9 befindet. Dieser Raum 11 ist auf der Membran 8 abgewandten Seite durch eine zweite Membran 12 begrenzt, die parallel zu Membran 8 ist. so daß diese Membran parallel zur Durchflußrichtung der Flüssigkeit 4 liegt. Auf der Außenseite der Membran 12 liegt damit die Flüssigkeit 4 an, so daß auf die Außenseite der Membran 12 von der Flüssigkeit 4 einwirkende Unterschiede des hydrostatischen Druckes durch die Flüssigkeit 9 über die Leitung 10 auf die Innenseite der Membran 8 übertragen wird.

Da somit die Innenseite der Membran 8 dem hydrostatischen Druck der zu messenden Flüssigkeit 4 und die Außenseite der Membran 8 dem hydrostatischen Druck der Referenzflüssigkeit 5 ausgesetzt ist, wird die Membran 8 entsprechend der Differenz dieser beiden Flüssigkeiten 4 und 5 bewegt. Hierbei ist von Bedeutung, daß der hydrostatische Druck der Referenzflüssigkeit gleichbleibend ist, da die Höhe h der Flüssigkeitssäule der Referenzflüssigkeit 5 stets gleichbleibend ist und auch das spezifische Gewicht $\gamma$1 sich nicht ändert. Die Höhe h der Referenzflüssigkeit stellt gleichzeitig die Meßhöhe für die zu messende Flüssigkeit 4 dar. Dagegen ändert sich das spezifische Gewicht $\gamma$2 der zu messenden Flüssigkeit 4 aufgrund ihrer unterschiedlichen Dichte. Die an der Membran 8 anliegende Druckdifferenz $\Delta$P ist somit (h x $\gamma$2) - (h x $\gamma$1), wobei sich bei dieser Formel nur der Wert $\gamma$2 ändert, so daß die an der Membran 8 meßbare Druckdifferenz direkt einen Wert für das spezifische Gewicht $\gamma$2 der zu messenden Flüssigkeit und damit ihrer Dichte ergibt. Es gilt somit $\Delta$P entspricht $\gamma$2. Der, den hydrostatischen Drücken (h x $\gamma$1) und (h x $\gamma$2) überlagerte, um ein vielfaches höhere, Prozeßdruck wirkt in gleichem Maße auf beide Seiten der Membran 8 und hebt sich somit auf.

Die von der Membran 8 ausgeführten Bewegungen werden auf eine Meßvorrichtung 11 übertragen. Diese Meßvorrichtung 11 weist ein - schwingfähiges Element 13 insbesondere in Form eines schwingenden Drahtes auf, der zwischen zwei Stellen gespannt ist. Das erste Ende 13a des Drahtes 13 ist an der Membran 8 in ihrer Mitte befestigt, wobei diese Befestigungsstelle von einer Einrichtung 13a gebildet wird, die eine Überlastsicherung ist. Hierzu weist die Einrichtung 13a ein federndes Element 14 auf.

An der der Membran 8 gegenüberliegenden Seite ist das Element 13 mit seinem Ende an einem zylinderischen Teil 15 befestigt, das ein Metallrohr 16 an einem Ende verschließt. In diesem Metallrohr 16 liegt das Element 13 koaxial ein, wobei das andere der Membran 8 zugekehrte Ende des waagerechten Metallrohrs 16 im Gehäuse 17 der unteren Meßvorrichtung 11 unverschieblich befestigt ist. Das Metallrohr 16 ist innen von einem Gas insbesondere Luft gefüllt, in dem das Element 13 schwingt. Das Element 13 ist von elektrischem Strom durchflossen und Bestandteil eines Schwingkreises, wobei eine elektrische Leitung 18 am Teil 15 und eine zweite elektrische Leitung 19 am Gehäuse 17 angeschlossen ist. Da das Metallrohr 16 und das Teil 15 gegenüber dem Gehäuse 17 durch isolierende Büchsen oder Ringe 20 gelagert ist, kann der durch die Leitung 19 angeschlossene Strom über das Gehäuse 17 das Element 13 nur über die Einrichtung 13 bzw. die Membran 8 erreichen. Das Metallrohr 16 durchquert innerhalb des Gehäuses 17 eine innere Kammer 21, in der ein Permanentmagnet 22 befestigt ist, der das Metallrohr 16 umgibt.

Das drahtförmige Element 13 ist somit Bestandteil eines elektrischen Schwingkreises, wobei die Frequenz der Schwingungen des Elements 13 von seiner Spannung bestimmt wird, die wiederum durch die Zugkraft bestimmt ist, die von der Membran 8 erzeugt wird. Die Leitungen 18 und 19 führen nach außen zu einer elektrischen Einrichtung 23, die den zweiten Teil des Schwingkreises. Der Schwingkreis ist wiederum Teil eines in der elektrischen Einrichtung enthaltenen Oszillators, dessen Frequenz von der Spannung des Elements 13 abhängt. Die mechanischen Schwingungen des Elements 13 werden in ein elektrisches Wechselspannungssignal über der Induktion durch den Magneten 22 umgesetzt.

Der Oszillator zeigt daher der elektrischen Einrichtung oder einer äquivalenten elektrischen Einrichtung die Frequenz des Schwingkreises an, die sich entsprechend der Dichte der zu messenden Flüssigkeit ändert. Dieses Frequenzsignal kann in elektrischen Einrichtungen verstärkt und gewandelt werden, um auf einer Skala oder einem Treibgerät Werte anzugeben, die direkt die Dichte der Flüssigkeit 4 zeigen.

Das obere Ende des Rohres 3 ist verschlossen und über eine Leitung 24 mit dem Inneren eines Balges 25 verbunden, der mit seiner Achse senkrecht und damit parallel zur Achse des Gehäuses 1 ist und innerhalb der Flüssigkeit 4 liegt. Der Balg 25 nimmt damit temperaturbedingte Volumenänderungen der Referenzflüssigkeit, hervorgerufen durch Schwankungen der Prozeßtemperatur, im Rohr 3 auf, so daß Temperaturschwankungen in gleichem Maße dem hydrostatischen Drücken (h x $\gamma$1) und (h x $\gamma$2) überlagert werden und sich nicht als Druckänderungen auf die Membran 8 auswirken. Damit ergibt sich eine vollständige temperaturkompensierte Messung der Dichte.

In nicht dargestellten alternativen Ausführungen kann das schwingfähige Element statt von einem Draht auch von einer Saite, einem Rohr, eine Folie oder einem federnden Element gebildet sein. Ferner kann das Element 12 mit einem Ende an der Membran 8 und mit seinem anderen Ende an der Membran 12 befestigt sein. In einer solchen Ausführung können die Übertragungsflüssigkeit 9 und die Leitung 10 fehlen.

Ferner ist es auch möglich, daß nur eine einzige Membran bzw. ein einziger Balg vorgesehen ist, an dem das Element 12 mit einem Ende befestigt ist, wobei dann auf der einen Seite der Membran bzw. des Balges die Referenzflüssigkeit 5 und auf der anderen Seite der Membran bzw. dem Inneren des Balges die zu messende Flüssigkeit 4 anliegt.

Bei einer alternativen Ausführung kann das Gehäuse 1 in seiner Wand 1a in unterschiedlichen Höhen eine obere erste Öffnung 26 und eine darunter befindliche zweite Öffnung 27 aufweisen, in die jeweils rohrstutzenförmige Gehäuse 28 koaxial eingeschweißt sind. Die Gehäuse 28 stehen damit außen am Gehäuse 1 vor und sind jeweils durch eine Spannmutter 29 mit Sicherungskette außen verschlossen. Im oberen Gehäuse 28 liegt ein hohler kreisrunder scheibenförmiger Trägerkörper 30 ein, der durch einen Anpreßkegel oder einen Kugelabschnitt an der Innenseite der Spannmutter 29 gegen einen Innenflansch des Gehäuses 28 abdichtend gedrückt wird.

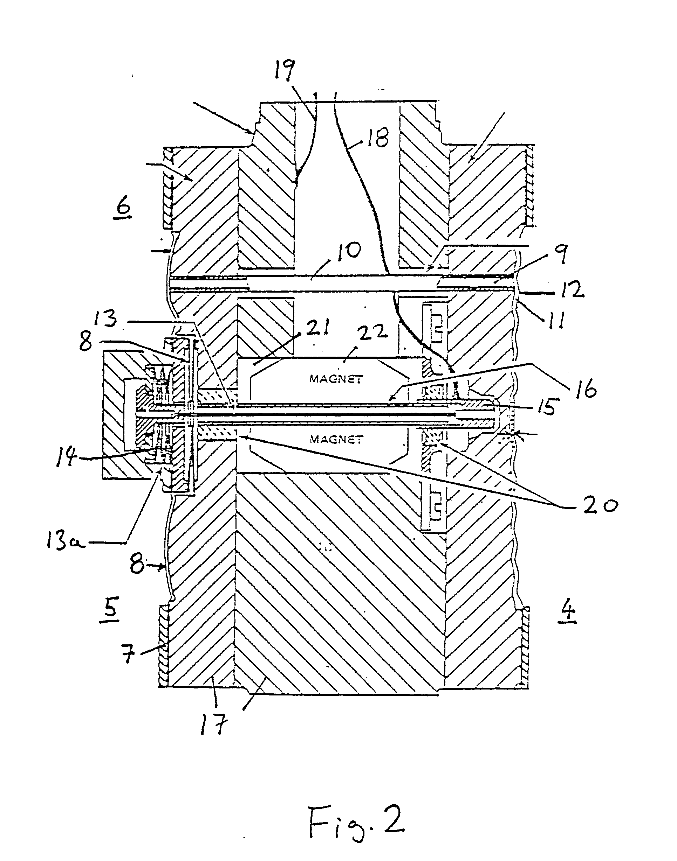

Die Innenseite des Körpers 30 bei der ersten Öffnung 26 bildet eine Membran 31, an deren Außenseite die zu messende Flüssigkeit anliegt. Im Innern des Körpers 30 befindet sich die Referenzflüssigkeit, die über eine Leitung 31 mit dem hohlen Trägerkörper 32 der zweiten Öffnung 27 verbunden ist. Dieser Körper 32 enthält nicht nur auf der der zu messenden Flüssigkeit 4 zugewandten Seite eine Membran, sondern innen darüber hinaus den Differenzdrucksensor mit Schwingseite einschließlich einer zweiten Membran oder einem zweiten Balg entsprechend dem ersten Ausführungsbeispiel. Deshalb ist auch am Körper 32 ein elektrischer Anschluß 33 zur elektrischen Einrichtung 23 vorgesehen. Die Arbeitsweise dieses zweiten Ausführungsbeispiels entspricht der Arbeitsweise des ersten Ausführungsbeispiels. Hierbei übernimmt die obere Membran 31 die Funktion des Balgs 25 beim ersten Ausführungsbeispiel und die untere Membran 34 die Arbeitsweise der Membran 12. Das Innere des Körpers 32 ist nicht dargestellt und entspricht der Ausführung nach Fig. 2.

## Ansprüche

1. Verfahren zum Messen der Dichte einer Flüssigkeit mit einem Meßfühler, der innerhalb der Flüssigkeit angeordnet ist und die Frequenz eines Oszillators bestimmt, **dadurch gekennzeichnet,** daß der Flüssigkeitsdruck der zu bestimmenden Flüssigkeit (4) und einer Referenzflüssigkeit (5) gemessen werden, und die Differenz der Drücke die Spannung eines mechanisch schwingfähigen Elementes (13) verändert, dessen Frequenz als Maß für die Dichte der zu bestimmenden Flüssigkeit verwendet wird.

2. Vorrichtung zum Durchführen des Verfahrens nach Anspruch 1, **dadurch gekennzeichnet,** daß der Druck der zu bestimmenden Flüssigkeit (4) an einer Seite einer Membran (8) oder eines Balges und die Referenzflüssigkeit an der anderen Seite der Membran (8) oder des Balges anliegt, und daß an der Membran (8) oder dem Balg das schwingfähige Element (13) direkt oder über Übertragungsteile(13a) befestigt ist.

3. Vorrichtung nach Anspruch 2, **dadurch gekennzeichnet,** daß der Druck der beiden Flüssigkeiten (4) an einer Seite der Membran (8) oder des Balges durch eine Übertragungsflüssigkeit (9) anliegt, die an einer Seite einer zweiten Membran (12) oder eines zweiten Balges anliegt, an deren oder dessen zweiten Seite die zu bestimmende Flüssigkeit (4) oder die Referenzflüssigkeit anliegt.

4. Vorrichtung zum Durchführen des Verfahrens nach Anspruch 1, **dadurch gekennzeichnet,** daß der Druck der zu bestimmenden Flüssigkeit an einer Seite einer ersten Membran oder eines ersten Balges und die Referenzflüssigkeit an der entgegengesetzten Seite einer zweiten Membran oder eines zweiten Balges anliegt, und daß zwischen den Membranen oder den Bälgen das schwingfähige Element gespannt ist.

5. Vorrichtung nach einem der Ansprüche 1 bis 3, **dadurch gekennzeichnet,** daß das schwingfähige Element (13) in einem mit Gas insbesondere Luft gefülltem Rohr (16) einliegt, das an einer Seite verschlossen und an dieser Seite das schwingfähige Element (13) mit einem Ende fest ist, und daß das schwingfähige Element (13) mit seinem anderen Ende an der Membran (8) oder dem Balg fest ist.

6. Vorrichtung nach einem der vorherigen Ansprüche, **dadurch gekennzeichnet,** daß mindestens eine der Befestigungsstellen des schwingfähigen Elements (13) von einer Überlastsicherung (13a) gebildet wird.

7. Vorrichtung nach einem der vorherigen Ansprüche, **dadurch gekennzeichnet,** daß die Membran (12), an der die zu bestimmende Flüssigkeit (4) anliegt, parallel zur Strömungsrichtung der zu bestimenden Flüssigkeit befestig ist.

8. Vorrichtung nach einem der vorherigen Ansprüche, **dadurch gekennzeichnet,** daß die Referenzflüssigkeit (5) in einem insbesonderen senkrechten Rohr (3) ist, das innerhalb der zu bestimmenden Flüssigkeit (4) liegt.

9. Vorrichtung nach Anspruch 8. **dadurch gekennzeichnet,** daß das mit Referenzflüssigkeit (5) gefüllte senkrechte Rohr (3) mit dem Innern eines der Referenzflüssigkeit gefüllten Balges (25) verbunden ist, der innerhalb der zu bestimmenden Flüssigkeit (4) liegt.

10. Vorrichtung nach einem der vorherigen Ansprüche, **dadurch gekennzeichnet,** daß das - schwingfähige Element (13) stromdurchflossen und Bestandteil eines Schwingkreises ist.

11. Vorrichtung nach einem der vorherigen Ansprüche, **dadurch gekennzeichnet,** daß das - schwingfähige Element (13) ein Magnetfeld durchquert und aufgrund der Schwankungen des durch ihn fließenden Stroms schwingt.

12. Vorrichtung nach Anspruch 11, **dadurch gekennzeichnet,** daß das Magnetfeld durch seitlich des Elements angeordnete Elektromagnete (22), insbesondere Permanentmagnete, erzeugt wird.

13. Vorrichtung nach einem der vorherigen Ansprüche, **dadurch gekennzeichnet,** daß das - schwingfähige Element (13) ein langgestrecktes Teil geringer Biegefestigkeit aus stromleitendem Material, insbesondere eine Saite, ein Draht, ein Rohr, eine Folie oder ein federndes Element ist.

14. Vorrichtung nach einem der vorherigen Ansprüche, **dadurch gekennzeichnet,** daß das - schwingfähige Element (13) elektrisch mit einem Meßinstrument (23) verbunden ist, das den zweiten Bestandteil des Schwingkreises bildet und die jeweilige Freuquenz und damit die Flüssigkeitsdichte anzeigt.

15. Vorrichtung nach einem der vorherigen Ansprüche, **dadurch gekennzeichnet,** daß das - schwingfähige Element (13) zwischen zwei Membranen eingespannt ist, die jeweils die beiden Flüssigkeiten voneinander trennen.

16. Vorrichtung nach einem der Ansprüche 2 bis 15, **dadurch gekennzeichnet,** daß die zu bestimmende Flüssigkeit (4) durch ein Rohr, Gehäuse (1) oder einen Behälter geführt ist, dessen Wandung mindestens eine Öffnung (26, 27) aufweist, in der eine Membran (31, 34) oder ein Balg befestigt oder angeschlossen ist.

17. Vorrichtung nach Anspruch 16, **dadurch gekennzeichnet,** daß in der Wandung zwei Öffnungen (26, 27) sind, wobei an der ersten Öffnung eine erste Membran (31) befestigt ist, an deren Vorderseite die zu bestimmende Flüssigkeit (4) anliegt und an deren Rückseite die Referenzflüssigkeit (5) anliegt, und daß an der zweiten Öffnung (27) eine zweite Membran (34) befestigt ist, an deren Vorderseite die zu bestimmende Flüssigkeit (4) anliegt und deren Rückseite mit dem mechanisch schwingfähigen Element direkt oder indirekt verbunden ist, das ferner von der Referenzflüssigkeit (5) beeinflußt ist.

18. Vorrichtung nach Anspruch 16 oder 17, **dadurch gekennzeichnet,** daß auf den Wandungsöffnungen (26, 27) außen Gehäuse (28) befestigt sind, die durch einen Deckel. insbesondere eine Spannmutter (29), verschlossen sind, der eine die Membran(en), (31, 34) tragende Einrichtung (30, 32) gegen der Öffnungsrand drückt.

19. Vorrichtung nach Anspruch 18. **dadurch gekennzeichnet,** daß das Innere der die Membran(en) (31, 34) tragenden Einrichtungen (30, 32) über eine Leitung (31) verbunden sind, die außerhalb des Rohres, Gehäuses (1) oder des Behälters verläuft.

0 245 673

Fig. 1

Fig. 2

Fig.3